# EUROPÄISCHE PATENTSCHRIFT

(11) **EP 1 747 369 B1**
(45) Veröffentlichungstag und Bekanntmachung des Hinweises auf die Patenterteilung: **05.09.2007**
(21) Anmeldenummer: 05733548.1
(22) Anmeldetag: 12.04.2005
(51) Int. Cl.: F02M 25/07, F16K 11/04

(54) **REGELBARE ZWEIWEGEVENTILVORRICHTUNG**
CONTROLLABLE TWO-WAY VALVE
DISPOSITIF SOUPAPE A DEUX VOIES REGLABLE

(30) Priorität: 21.05.2004 DE 102004025184
(43) Veröffentlichungstag der Anmeldung: 31.01.2007
(73) Patentinhaber: Pierburg GmbH, 41460 Neuss (DE)
(72) Erfinder: KÖSTER, Andreas, 45149 Essen (DE); DISMON, Heinrich, 52538 Gangelt (DE); HÜSGES, Hans-Jürgen, 47877 Willich (DE); KÜHNEL, Hans-Ulrich, 41239 Mönchengladbach (DE); DELLEN, Franz, 47877 Willich (DE); RÖTTGES, Riedel, 47918 Tönisvorst (DE)
(74) Vertreter: Ter Smitten, Hans
(86) Internationale Anmeldenummer: PCT/EP2005/003802
(87) Internationale Veröffentlichungsnummer: WO 2005/113972

(56) Entgegenhaltungen:
- EP-A- 0 900 931
- DE-A1- 3 109 285
- DE-A1- 10 025 877
- DE-A1- 19 734 801
- FR-A- 2 067 442

## Beschreibung

Die Erfindung betrifft eine regelbare Zweiwegeventilvorrichtung für eine Verbrennungskraftmaschine, die eine Ventilstange und zumindest zwei Ventilglieder aufweist und die über eine Stelleinheit betätigbar ist, sowie mit einem Gehäuse, in welchem ein Einlaß oder ein Auslass und zwei Auslässe oder Einlässe ausgebildet sind, wobei der jeweils eine Einlass oder Auslass mit einem oder beiden der Auslässe oder Einlässe fluidisch verbindbar ist.

Derartige regelbare Zweiwegeventilvorrichtungen sind insbesondere als kombinierte Abgasrückführ- und Bypassventilvorrichtungen bekannt, bei denen zwei Ventilglieder über eine Stelleinheit betätigt werden, um die Schadstoffemissionen eines Verbrennungsmotors zu verringern, indem in der Warmlaufphase das Abgas über den Bypass geführt wird und nach Aufheizen eines Katalysators das Abgas über den Abgaskühler zurückgeführt wird.

So wird in der DE 100 25 877 ein Abgasrückführsystem mit einer Ventilvorrichtung beschrieben, welche einen Abgaseinlaß und zwei Abgasauslässe aufweist, wobei einer der Abgasauslässe zu einem Kühler führt und der andere Abgasauslaß zu einem den Kühler umgehenden Bypasskanal führt. An einem Gehäuse des Ventils ist zwischen dem Abgaseinlaß und den beiden Abgasauslässen jeweils ein Ventilsitz angeordnet, der von einem tellerförmigen Ventilglied beherrscht wird. Dabei ist ein Ventilglied auf einer inneren Ventilstange angeordnet, die über die Stelleinheit bewegbar ist und das zweite, näher zur Stelleinheit angeordnete Ventilglied ist auf einer die erste Ventilstange umgebenden zweiten rohrförmigen Ventilstange fest angeordnet. Die Stelleinheit ist dabei so ausgeführt, daß in der Stelleinheit zwei Federn angeordnet sind, über welche die beiden Ventilteller vorgespannt auf ihre Ventilsitze gedrückt werden. Die innere und die äußere Ventilstange sind jeweils verschiebbar zueinander angeordnet, so daß die pneumatische oder elektromotorische Stelleinheit so ausgeführt ist, daß je nach Bewegungsrichtung lediglich eine der Ventilstangen und somit auch nur eines der Ventilglieder vom Ventilsitz abgehoben wird.

In der DE 198 12 702 A1 wird ebenfalls eine Ventilanordnung zur Steuerung eines rückgeführten Abgasstromes beschrieben, wobei diese hinter einem Bypasskanal beziehungsweise einem Abgaskühler angeordnet sind, so diese zwei Einlässe und einen Auslaß aufweist. Die beiden jeweils mit einem Ventilsitz korrespondierenden Ventilglieder werden über zwei im Kanal angeordnete Schraubenfedern jeweils auf den Ventilsitz gedrückt. Beide Ventilglieder weisen in der Mitte eine Bohrung auf, durch die zumindest teilweise eine gemeinsame Ventilstange reicht. Die Ventilstange weist zwei Bünde auf, über die die Ventilglieder bei Betätigung der Ventilstange jeweils einzeln in Öffnungsrichtung gegen die Federkraft über den Bund betätigt werden können, wobei das jeweils andere Ventilglied auf der Ventilstange gleiten soll, da es durch die Federkraft weiter auf den Ventilsitz gedrückt wird.

Die DE 197 33 964 A1 beschreibt eine ähnliche Ventilanordnung, wobei die Vorspannung der beiden Ventilteller hier über eine zwischen den beiden Ventittellern angeordnete Feder erreicht wird, so daß die beiden Bünde der Ventilstange jeweils am zur Feder entgegengesetzten Ende der Ventilteller angeordnet sind.

Nachteilhaft an den genannten Ausführungen ist das entweder zwei Ventilstangen und somit entsprechend aufwendige Stelleinheiten zur voneinander unabhängigen Verstellung der Ventilstangen erforderlich sind, oder bei der Ausführung mit einer einzelnen Ventilstange die Ventilglieder nicht fest auf der Stange angeordnet sind und somit keine definierte Lage im Gehäuse einnehmen. Des weiteren ist eine derartige Ventilanordnung sehr schmutzempfindlich, da sowohl die Schraubenfedern im abgasdurchströmten Bereich angeordnet sind, als auch im abgasdurchströmten Bereich die Ventilstange durch die Ventilbohrungen reicht und dort bewegt werden muß. Durch Ruß können sich Ablagerungen an der Ventilstange bilden, so daß eine einwandfreie Funktion nämlich ein Gleiten der Ventilstange in den Bohrungen der Ventilglieder nicht mehr gewährleistet ist. Des weiteren kann in allen Ausführungen nur einer der beiden Ein- oder Auslässe geöffnet werden, so daß eine gleichzeitige Durchströmung des Kühlers und des Bypasskanals nicht möglich ist, wodurch Mischtemperaturen nicht erreicht werden können. Durch auftretende Abgaspulsationen am Ventil ist die Federkraft für einen zuverlässigen Verschluss der Kanäle sehr groß zu wählen, womit auch die Stelleinheit beim Öffnen gegen die Federkraft hohe Kräfte aufbringen muss und somit groß und kostenintensiv auszuführen ist.

Aufgabe der Erfindung ist es daher, ein von einer einfachen Stelleinheit angesteuerte regelbare Zweiwegeventilvorrichtung zu schaffen, welche lediglich eine Ventilstange aufweist und bei der es möglich ist, beide Auslassströme oder Einlassströme einzeln und unabhängig voneinander zu steuern und eine Abgasrückführung vollständig und zuverlässig trotz auftretender Gaspulsationen zu unterbrechen. Des weiteren soll das Ventil möglichst schmutzunempfindlich sein und kostengünstig herzustellen und zu montieren sein. In bevorzugter Ausführung sollen auch Teilströme durch den Abgaskühler beziehungsweise den Bypasskanal geleitet werden können, so daß Mischtemperaturen gefahren werden können.

Diese Aufgabe wird dadurch gelöst, daß die Ventilstange fest mit den zumindest zwei Ventilgliedern verbunden ist, welche mit zumindest zwei Ventilsitzen korrespondieren, wobei die zumindest zwei Ventilglieder drei Steuerflächen aufweisen. Somit wird eine Ventilvorrichtung geschaffen, bei der die Ein- beziehungsweise Auslaßkanäle jeweils einzeln verschließbar sind, wobei hierzu nur eine Ventilstange, welche mit einer Stellvorrichtung verbunden ist, benötigt wird. Zudem sind keine inneren Einbauten oder Vorspannungen der Ventilstange oder der Ventilglieder notwendig. Eine mögliche Mengenregelung der einzelnen Ströme zum Bypasskanal oder zum Abgaskühler bleibt erhalten. Bei entsprechender Anordnung der unterschiedlichen Ventilglieder zu den Ventilsitzen wird es bei einer derartigen Vorrichtung möglich, definierte Temperaturen durch eine Mischung des Abgasstromes zu erreichen, der zum Teil durch den Abgaskühler und zum Teil durch den Bypasskanal geführt wird.

Vorzugsweise ist die regelbare Zweiwegeventilvorrichtung eine kombinierte Abgasrückführ- und Bypassventilvorrichtung, wobei der Einlaß mit einem Abgasrückführkanal fluidisch verbunden ist, der erste Abgasauslaß direkt oder über einen Kanal mit einem Abgaskühler fluidisch verbunden ist und der zweite Abgasauslaß mit einem Bypasskanal fluidisch verbunden ist, über den der Abgaskühler umgehbar ist.

Vorzugsweise weist zumindest eines der Ventilglieder eine sich in axialer Richtung zur Ventilstange erstreckende Steuerfläche auf, wodurch eine Abgasmassenstromsteuerung einfach und kostengünstig realisierbar wird. Beide Auslassströme sind einzeln und unabhängig voneinander zu steuern und eine Abgasrückführung kann vollständig und zuverlässig trotz auftretender Gaspulsationen unterbrochen werden, da keine zusätzlich am Ventilglied angreifende Federkraft überwunden werden muss.

In einer weiterführenden Ausführungsform ist die sich axial erstreckende Steuerfläche als zylindrischer Außenmantel ausgeführt, dessen Mittelachse durch die Ventilstange gebildet ist. Somit ist eine einfache Herstellbarkeit und Montage gewährleistet.

In einer bevorzugten Ausführungsform sind auf der Ventilstange drei Ventilglieder angeordnet, welche mit je einem Ventilsitz zusammen wirken, wobei ein erstes Ventilglied den Abgaseinlaß beherrscht, ein zweites Ventilglied den Auslaß zum Abgaskühler beherrscht, welcher zwischen dem Abgaseinlaß und dem Auslaß zum Bypasskanal angeordnet ist und die sich axial erstreckende Steuerfläche aufweist, wobei das zweite Ventilglied in axialer Richtung durchströmbar ist, und ein drittes Ventilglied den Auslass zum Bypasskanal beherrscht. Eine derartige Anordnung ist geeignet, in unterschiedlichen Stellungen der Ventilstange sowohl den Abgasstrom vollständig abzusperren als auch lediglich die fluidische Verbindung zum Kühler oder zum Bypass zu sperren, als auch das Abgas sowohl zum Kühler als auch zum Bypass zu leiten, wodurch eine Temperatursteuerung möglich wäre. Je nach Höhe der axialen Steuerfläche ist auch eine Mengenregelung zum Bypasskanal bei geschlossenem Kühlkanal möglich.

In einer alternativen Ausführungsform sind auf der Ventilstange zwei Ventilglieder angeordnet, wovon ein erstes eine sich axial erstreckende und eine sich radial erstreckende Steuerfläche aufweist, wobei jede Steuerfläche mit einem Ventilsitz korrespondiert. Im Vergleich zur alternativen Ausführung kann ein Ventilglied eingespart werden und eine Regelung der Abgasmassenströme zum Bypass oder zum Kühler wird durch zwei fest mit der Ventilstange verbundene Ventilglieder verwirklicht.

In einer dazu weiterführenden Ausführungsform beherrscht die sich radial erstrekkende Steuerfläche des ersten Ventilgliedes den Abgaseinlaß, die sich axial erstrekkende Steuerfläche des ersten Ventilgliedes den Auslaß zum Bypasskanal und eine sich radial erstreckende Steuerfläche des zweiten Ventilgliedes den Abgasauslaß zum Abgaskühler, wodurch eine einfache Anordnung gegeben ist, die einen geringen Bauraumbedarf durch die Anordnung der unterschiedlichen Ein- und Auslässe sowie der Ventilglieder aufweist. Eine Steuerung der rückgeführten Abgasmengen zum Kühler und zum Bypass kann durch eine derartige Anordnung verwirklicht werden.

Ergänzend kann das zweite Ventilglied eine sich axial erstreckende Mantelfläche aufweisen. Diese dient zur besseren Abdichtung des Abgasstromes zum Kühler.

In einer weiterführenden Ausführungsform ist die sich axial erstreckende Steuerfläche des ersten Ventilgliedes als zylindrischer Außenmantel ausgeführt, dessen Durchmesser kleiner ist, als der Durchmesser des zweiten Ventilgliedes und zwischen einer Innenwand des Gehäuses und dem zylindrischen Außenmantel ist ein Spalt ausgebildet, der an der von dem ersten Auslaß abgewandten Seite angeordnet ist. Hierdurch wird die fluidische Verbindung zum Abgaskühler bei geöffneter Steuerfläche am Einlass ermöglicht und eine sichere Funktion der Vorrichtung auf kleinem Bauraum verwirklicht, wobei die Montage und Herstellung der Einzelteile insbesondere auch des Gehäuses des Ventils kostengünstig durchzuführen ist.

In einer alternativen Ausführungsform ist der Abgaseinlaß zwischen den Abgasauslässen angeordnet, wodurch eine Abgasmassenstromregelung zum Bypass und zum Kühler bei jeweils geschlossenem anderen Auslaß zum Bypass beziehungsweise Kühler möglich ist und lediglich zwei Ventilsitze beherrscht und ausgebildet werden müssen.

In einer dazu weiterführenden Ausführungsform ist der Abstand zwischen zwei sich radial erstreckenden Steuerflächen des ersten und des zweiten Ventilgliedes gleich der Höhe des Abgaseinlasses zwischen einem ersten und zweiten Ventilsitz, wovon der erste Ventilsitz den Durchgang zwischen dem Abgaseinlaß und dem Abgasauslaß zum Bypasskanal und der zweite Ventilsitz den Durchgang zwischen dem Abgaseinlaß und dem Abgasauslaß zum Abgaskühler umgibt. Hierdurch wird ein vollständiger und sicherer Verschluß durch die Auflagen der sich radial erstreckenden Steuerflächen gewährleistet bei abgeschalteter Abgasrückführung gewährleistet.

In einer wiederum dazu weiterführenden Ausführungsform ist der Abgaseinlaßstrom durch das Aufliegen der sich radial erstreckenden Steuerflächen auf den Ventilsitzen unterbrochen und die sich axial erstreckende Steuerfläche des ersten Ventilgliedes weist einen gleichen Außendurchmesser auf, wie der Innendurchmesser beider Ventilsitze und weist eine Höhe auf, die im wesentlichen dem Abstand der beiden Ventilsitze zueinander entspricht, so daß die sich axial erstreckende Steuerfläche wahlweise mit jeweils einem der beiden Ventilsitze zusammen wirkt. Somit ist auch hier eine Abgasmengenstromregelung bei einem geschlossenen zweiten Auslaß möglich. Gleichzeitig ist dieses Ventil verschmutzungsunempfindlich und benötigt geringe Stellkräfte, so dass eine kleine und kostengünstige Stelleinheit gewählt werden kann.

Es wird somit für ein Zweiwegeventil möglich, mit nur einer Stellvorrichtung und einer Ventilstange auf der zumindest zwei fest angeordnete Ventilglieder vorhanden sind, Abgasmengenströme sowohl zum Kühler als auch zu einem Bypasskanal unabhängig voneinander zu steuern, wobei eine weitestgehende Unempfindlichkeit gegen Verschmutzungen gegeben ist und eine kostengünstige Herstellbarkeit und Montage möglich ist. Auch bei auftretenden Pulsationen des Abgases benötigt die Stelleinheit nur geringe Stellkräfte, so dass kostengünstige Antriebe verwendet werden können und der Bauraumbedarf sinkt.

Drei Ausführungsbeispiele einer erfindungsgemäßen Zweiwegeventilvorrichtung sind am Beispiel einer Abgasrückführ- und Bypassventilvorrichtung in den Zeichnungen dargestellt und werden nachfolgend beschrieben.

Figur 1 zeigt eine erfindungsgemäße Zweiwegeventilvorrichtung in Seitenansicht und schematischer und geschnittener Darstellung mit drei Ventilgliedern.

Figur 2 zeigt eine zweite erfindungsgemäße Zweiwegeventilvorrichtung mit zwei Ventilgliedern ebenfalls in geschnittener schematischer Darstellung.

Figur 3 zeigt in schematischer Darstellung eine dritte Ausführungsform in Seitenansicht und schematischer Darstellung, wobei die Funktionsweise anhand unterschiedlicher Stellungen des Ventils dargestellt ist.

Bei der Beschreibung der verschiedenen Ausführungsformen werden für gleiche Funktionen erfüllende Teile gleiche Bezugsziffern verwendet.

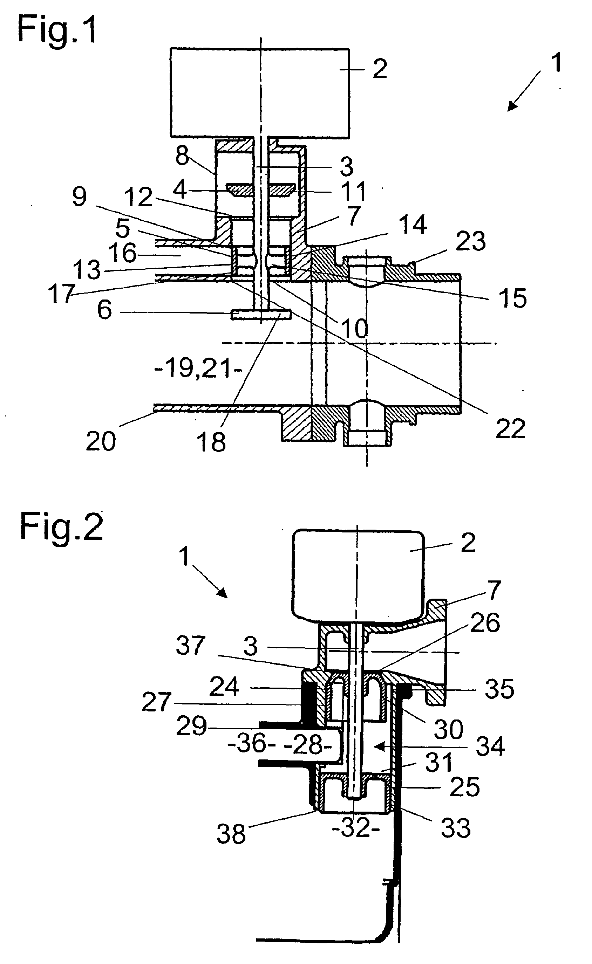

Die in Figur 1 dargestellte kombinierte Abgasrückführ- und Bypassventilvorrichtung 1 besteht aus einer Stelleinheit 2, über welche eine Ventilstange 3 translatorisch in Bewegung versetzbar ist. Die Stelleinheit 2 ist dabei vorzugsweise als in beiden Richtungen wirksamer elektromotrischer Antrieb mit einem Positionssensor auszuführen. Auf der Ventilstange 3 sind drei Ventilglieder 4, 5, 6 fest angeordnet, welche mit in einem Gehäuse 7 der Abgasrückführ- und Bypassventilvorrichtung 1 ausgebildeten Abgasein- beziehungsweise auslässen 8, 9, 10 zusammen wirken, wobei jedem Ventilglied 4, 5, 6 genau ein Abgasein- beziehungsweise -auslaß 8, 9, 10 zugeordnet ist. Eine Steuerfläche 11 des ersten Ventilgliedes 4 wirkt mit einem Ventilsitz 12 zusammen, welche am Ende des Abgaseinlasses 8 angeordnet ist, so daß bei Aufsitzen des Ventilgliedes 4 auf dem Ventilsitz 12 ein rückgeführter Abgasstrom unterbrochen wird. Der-Abgaseinlaß 8 ist dazu in bekannter Weise mit einem nicht dargestellten Abgasrückführkanal verbunden.

Das zweite Ventilglied 5 weist eine sich axial zur Ventilstange erstreckende Steuerfläche 13 auf, welche an einem zylindrischen Außenmantel 14 angeordnet ist, der über Stege 15 mit der Ventilstange 3 verbunden ist, so daß dieses Ventilglied 5 in axialer Richtung durchströmbar ist. Dieses Ventilglied 5 beherrscht durch seine sich axial erstreckende Steuerfläche 13 einen Kanal 16, der mit einem nicht dargestellten Abgaskühler verbunden ist. Dazu weist das Gehäuse 7 einen zweiten Ventilsitz 17 auf, welcher mit der sich axial erstreckenden Steuerfläche 13 des Ventilgliedes 5 korrespondiert. Das am weitesten von der Stelleinheit 2 entfernte Ventilglied 6 ist als Tellerventil ausgeführt und beherrscht über eine sich radial erstreckende Steuerfläche 18 einen zweiten Abgasauslaß 10, welcher im vorliegenden Ausführungsbeispiel direkt in einen Sammelkanal 19 eines Saugrohres 20 führt und als Bypasskanal 21 zur Umgehung des Abgaskühlers dient. Selbstverständlich ist es ebenso denkbar einen gesonderten Bypasskanal 21 auszubilden, der vom Ventilglied 6 beherrscht wird.

Zum Verschließen dieses Bypasskanals 21 korrespondiert das Ventilglied 6 mit einem Ventilsitz 22 welcher ebenfalls am Gehäuse 7 der Abgasrückführ- und Bypassventilvorrichtung 1 ausgebildet ist. Im vorliegenden Ausführungsbeispiel findet die Abgaseinleitung unmittelbar hinter einem Drosselklappenstutzen 23 statt.

In der in Figur 1 dargestellten Stellung der Ventilvorrichtung 1 und somit der Ventilglieder 4, 5, 6 wird eine fluidische Verbindung zwischen dem Abgasrückführkanal also dem Abgaseinlaß 8 und dem als Bypasskanal 21 dienenden Saugrohr 20 hergestellt, während das Ventilglied 5 den Kanal 16 zum Abgaskühler verschließt. Eine solche Stellung des Ventils 1 ist beispielsweise beim Start eines Verbrennungsmotors zur schnelleren Aufheizung des Katalysators üblich. Wird nun die Ventilstange 3 weiter nach unten bewegt, schiebt sich die Steuerfläche 13 des zylindrischen Außenmantels 14 des Ventilgliedes 5 von dem Ventilsitz 17, so daß der Kanal 16 zum Abgaskühler fluidisch mit dem Abgaseinlaß 8 verbunden wird. In einer derartigen Stellung wäre demnach eine Temperatursteuerung möglich, da mit weiter wachsender Öffnung des Auslasses 9 auch der Abgasstrom zum Kühler proportional zur durchströmten Fläche wachsen wird. Bei einem weiteren Verschieben der Ventilstange 3 in Richtung des Saugrohres setzt das Ventilglied 4 auf dem Ventilsitz 12 auf, so daß die Abgasrückführung unterbrochen wird.

Wiederum ausgehend von der in der Figur 1 dargestellten Stellung kann die Ventilstange 3 auch in Richtung zur Stellvorrichtung 2 bewegt werden, so daß wiederum der Abgasauslaß 9 geöffnet wird und eine Temperaturregelung über einen bestimmten Bereich möglich ist, da die durchströmten Querschnitte der Ventilsitze 17, 22 abhängig voneinander vergrößert bzw. verkleinert werden. In einer Endstellung dieser Bewegung ist der Abgasauslaß 9 vollständig geöffnet und das Ventilglied 6 sitzt auf dem Ventilsitz 22 auf, so daß der gesamte rückgeführte Abgasstrom nun über den Kühler dem Verbrennungsmotor zugeführt wird, was insbesondere in mittleren Lastbereichen eines Verbrennungsmotors bei bereits aufgeheizter Verbrennungskraftmaschine gewünscht ist.

Somit kann durch ein derartiges Zweiwegeventil sowohl die Abgasrückführung vollständig verschlossen werden, als auch wahlweise das Abgas entweder komplett über den Bypass- beziehungsweise das Saugrohr geführt werden oder vollständig über den Abgaskühler geführt werden. Auch ein Mischbetrieb ist möglich, wobei im Mischbetrieb die zum Kühler geführte Abgasmenge bei einem Bewegen der Ventilstange 3 im gleichen Verhältnis wächst oder fällt wie die über den Bypasskanal 21 geführte Menge fällt oder wächst. Durch Vergrößern der axialen Ausdehnung der axialen Steuerfläche 13 im Vergleich zu Figur 1 in Richtung der Stellvorrichtung ist auch eine Mengenregelung über den Bypasskanal 21 bei geschlossenem Kühlkanal 16 möglich.

Das in Figur 2 dargestellte Zweiwegeventil, welches auch hier als Abgasrückführ- und Bypassventilvorrichtung 1 ausgeführt ist, weist an seiner Ventilstange 3 lediglich zwei Ventilglieder 24 und 25 angeordnet sind, wobei das näher zur Stellvorrichtung 2 angeordnete Ventilglied 24 die Funktionen der Ventilglieder 4 und 5 aus Fig. 1 miteinander vereint. Dieses Ventilglied 24 weist sowohl eine sich radial erstreckende Steuerfläche 26 als auch eine sich axial erstreckende Steuerfläche 27 auf, die einen ersten Abgasauslass 28 beherrscht und welche im wesentlichen ebenso wie die Steuerfläche 12 in Figur 1 mit einem Ventilsitz 29 zusammen wirkt und Teil eines zylindrischen Außenmantels 30 ist. Auch das Ventilglied 25 weist eine sich radial erstreckende Steuerfläche 31 auf, welche einen zweiten Abgasauslaß 32 beherrscht. Dieses Ventilglied 25 weist zusätzlich auch einen zylindrischen Außenmantel 33 auf, welcher jedoch in erster Linie zur besseren Abdichtung gegenüber einer entsprechenden Bohrung 34 im Gehäuse 7 vorhanden ist, so daß Leckströme vermieden werden. Die beiden sich axial erstreckenden zylindrischen Außenmäntel 30, 33 sind dabei überschneidend beziehungsweise überdeckend ausgebildet, das heißt der zylindrische Außenmantel 33 des Ventilgliedes 25 weist einen größeren Durchmesser auf, als der zylindrische Außenmantel 30 des Ventilgliedes 24. Während der zylindrische Außenmantel 33 vollständig an den Innenwänden des Gehäuses 7 anliegt, weist der zylindrische Außenmantel 30 einen Spalt 35 zur Innenwand des Gehäuses 7 auf, der an der zum Auslaß 28 entgegen gesetzten Seite der Ventilstange 3 ausgebildet ist.

Im vorliegenden Ausführungsbeispiel wird vorzugsweise der Abgasauslaß 28 mit einem Bypasskanal 36 verbunden, während der Abgasauslaß 32 zu einem Kühler der Verbrennungskraftmaschine führt. In vorliegender Stellung ist ein Ventilsitz 37 durch das Ventilglied 24 beziehungsweise seine sich radial erstreckende Steuerfläche 26 vollständig verschlossen, so daß keine Abgaseinleitung statt findet. Wird nun die Ventilstange 3 über die Stelleinheit 2 nach unten verschoben, löst sich die radiale erstreckende Steuerfläche 26 von dem Ventilsitz 37, so daß ein Abgasstrom über den Spalt 35 zum Bypasskanal 36 statt findet. Bei einem weiteren Verschieben der Ventilstange 3 wird der durchströmte Querschnitt durch einen Ventilsitz 37 vergrößert, so daß ein vermehrter Abgasstrom zum Bypasskanal 36 erfolgt, bis die sich axial erstreckende Steuerfläche 27 beginnt den Bypasskanal 36 zu verschließen, in dem sie sich teilweise vor den Ventilsitz 29 setzt. Dies geschieht bei weiterer Bewegung so lange bis der Bypasskanal 36 vollständig verschlossen ist.

Gleichzeitig mit dem vollständigen Verschluß des Auslasses 28 und somit des Bypasskanals 36 öffnet sich jedoch der Abgasauslaß 32, welcher zum Abgaskühler führt, da die sich radial erstreckende Steuerfläche 31 des Ventilgliedes 25 vollständig von einem sich radial erstreckenden Ventilsitz 38 abhebt, so daß ein Durchströmungsquerschnitt frei wird und nunmehr das Abgas vollständig über den Kühler geleitet wird, wie es nach der Warmlaufphase des Verbrennungsmotors üblich ist.

Somit ist es mit einer derartigen Ventilvorrichtung möglich, die rückgeführte Abgasmenge zu regeln und dies sowohl für eine Durchströmung des Bypasskanals 36 als auch für eine Durchströmung des Abgaskühlers. Ein Mischbetrieb ist in dieser vorliegenden Ausführung nicht möglich.

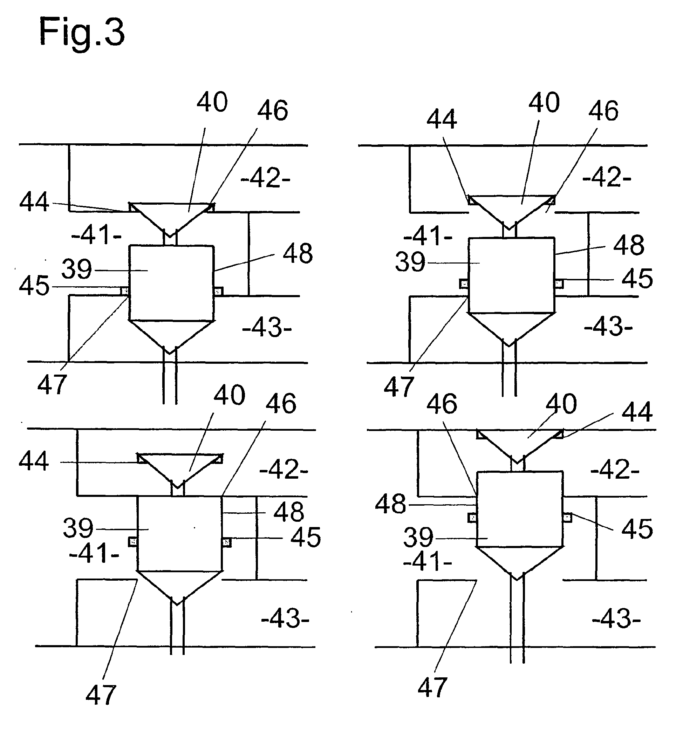

Das in Figur 3 schematisch dargestellte regelbare Zweiwegeventil weist ebenfalls wie das Ventil aus Figur 2 zwei Ventilglieder 39 und 40 auf. Entscheidender Unterschied zu den Abgasrückführ- und Bypassventilvorrichtungen 1 aus Figur 1 und 2 ist hier das ein Einlaß 41 nun zwischen zwei Auslässen 42 und 43 angeordnet ist. Anhand von vier unterschiedlichen Stellungen des Ventils 1 im Gehäuse 7 wird deutlich, auf welche Art die Regelung statt findet.

In Figur 3a befindet sich das Ventil 1 in einer die beiden Abgasauslässe 42 und 43 verschließenden Stellung. Dies erfolgt, indem beide Ventilglieder 39, 40 sich radial erstreckende Steuerflächen 44, 45 aufweisen, welche an zu den Auslässen 42 und 43 korrespondierenden Ventilsitzen 46, 47 aufliegen. Entsprechend ist der Abstand dieser beiden sich radial erstreckenden Steuerflächen 44, 45 gleich der Höhe des Abgaseinlasses 41.

In Figur 3b ist eine zweite Stellung dargestellt, in der nun die beiden sich radial erstreckenden Steuerflächen 44, 45 von den Ventilsitzen 46, 47 abgehoben sind. Hierdurch wird eine durchströmte Querschnittsfläche zum ersten Abgasauslaß 42 frei gegeben, während der Ventilsitz 47 nun von einer sich axial erstreckenden Steuerfläche 48 des zylindrisch ausgeführten Ventilgliedes 39 verschlossen wird, so daß ein Abgasstrom zum Abgasauslaß 43 nicht möglich ist. Durch leichtes Heben oder Senken in diesem Bereich wird somit ein Abgasstrom lediglich zum Abgasauslaß 42 geregelt.

Figur 3c zeigt im Vergleich hierzu eine Stellung in der die sich axial erstreckende Steuerfläche 48 nun beginnt mit dem Ventilsitz 46 zusammen zu wirken, das heißt den Durchgang zum ersten Abgasauslaß 42 zu verschließen. Gleichzeitig wird jedoch der Abgasauslaß 43 geöffnet, da sich die axial erstreckende Steuerfläche 48 vom Ventilsitz 47 abhebt, so daß nun ein geringer Abgasstrom zum Abgasauslaß 43 strömen kann. Entsprechend ist die Höhe der sich axial erstreckenden Steuerfläche 48 in diesem Ausführungsbeispiel so zu wählen, daß sie im wesentlichen der Höhe des Abgaseinlasses 41 entspricht. Gleichzeitig ist der Durchmesser beider Ventilsitze 46 und 47 sowie der axialen Steuerfläche 48 gleich zu wählen.

In Figur 3d befindet sich das Ventil 1 nun in einer weiter nach oben verschobenen Stellung, so daß der gesamte durchströmbare Querschnitt zum Abgasauslaß 43 freigegeben ist.

Somit sind beide Abgasströme unabhängig voneinander in ihrer Menge regelbar. Durch Anpassung der Höhen der axialen Steuerflächen können jeweils diese Ventile an entsprechende Anforderungen angepaßt werden, so daß gegebenenfalls auch Mischbetriebe möglich sind.

Durch diese Ausführungsformen werden verschmutzungsunempfindliche Zweiwegeventilvorrichtungen geschaffen, welche keine zusätzlichen inneren Einbauten benötigen und kostengünstig und einfach herstellbar sind. Sie gewährleisten sowohl eine Abschaltung als auch eine Steuerung beider vorhandener Auslassmengen bei geringen benötigten Stellkräften.

Es sollte klar sein, daß unterschiedliche Modifikationen des Aufbaus solcher Ventile möglich sind, wobei insbesondere die Anordnung der unterschiedlichen Ein- und Auslässe zueinander wie auch die Anordnung der axialen beziehungsweise radialen Steuerflächen zueinander geändert werden können. Auch eine Verwendung außerhalb des Abgasrückführbereichs ist denkbar, wobei klar sein sollte, daß sowohl eine Anordnung vor als auch hinter einem Abgas- beziehungsweise Bypasskanal möglich ist.

## Patentansprüche

1. Regelbare Zweiwegeventilvorrichtung für eine Verbrennungskraftmaschine, die eine Ventilstange (3) und zumindest zwei Ventilglieder (4, 5, 6 ; 24, 25 ; 39, 40) aufweist und die über eine Stelleinheit (2) betätigbar ist, sowie mit einem Gehäuse (7) in welchem genau ein Einlaß oder genau ein Auslass und zwei Auslässe oder Einlässe ausgebildet sind, wobei der jeweils genau eine Einlass oder Auslass mit einem oder beiden der Auslässe oder Einlässe fluidisch verbindbar ist, **dadurch gekennzeichnet, daß** die Ventilstange (3) fest mit den zumindest zwei Ventilgliedern (4, 5, 6; 24, 25; 39, 40) verbunden ist, welche mit zumindest zwei Ventilsitzen (12, 17, 22; 29, 37, 38; 46, 47) korrespondieren, wobei die zumindest zwei Ventilglieder (4, 5, 6; 22, 23; 39, 40) drei Steuerflächen (11, 13, 18 ; 26, 27, 31; 44, 45, 48) aufweisen.

2. Regelbare Zweiwegeventilvorrichtung für eine Verbrennungskraftmaschine nach Anspruch 1, **dadurch gekennzeichnet, dass** die regelbare Zweiwegeventilvorrichtung eine kombinierte Abgasrückführ- und Bypassventilvorrichtung (1) ist, wobei der genau eine Einlass (8, 41) mit einem Abgasrückführkanal fluidisch verbindbar ist, der erste Auslass (9, 32, 42) direkt oder über einen Kanal (16) mit einem Abgaskühler fluidisch verbindbar ist und der zweite Auslass (10, 28, 43) mit einem Bypasskanal (21, 36) fluidisch verbindbar ist, über den der Abgaskühler umgehbar ist.

3. Regelbare Zweiwegeventilvorrichtung für eine Verbrennungskraftmaschine nach Anspruch 1 oder 2, **dadurch gekennzeichnet, daß** zumindest eines der Ventilglieder (5; 24; 39) eine sich in axialer Richtung zur Ventilstange (3) erstreckende Steuerfläche (13; 27; 48) aufweist.

4. Regelbare Zweiwegeventilvorrichtung für eine Verbrennungskraftmaschine nach einem der vorhergehenden Ansprüche, **dadurch gekennzeichnet, daß** die sich axial erstreckende Steuerfläche (13; 27; 48) als zylindrischer Außenmantel (14; 30; 39) ausgeführt ist, dessen Mittelachse durch die Ventilstange (3) gebildet ist.

5. Regelbare Zweiwegeventilvorrichtung für eine Verbrennungskraftmaschine nach einem der vorhergehenden Ansprüche, **dadurch gekennzeichnet, daß** auf der Ventilstange (3) drei Ventilglieder (4, 5, 6) angeordnet sind, welche mit je einem Ventilsitz (12, 17, 22) zusammen wirken, wobei ein erstes Ventilglied (4) den Abgaseinlaß (8) beherrscht, ein zweites Ventilglied (5) den Auslaß (9) zum Abgaskühler beherrscht, welcher zwischen dem Abgaseinlaß (8) und dem Auslaß (10) zum Bypasskanal (21) angeordnet ist und die sich axial erstreckende Steuerfläche (13) aufweist, wobei das zweite Ventilglied (5) in axialer Richtung durchströmbar ist, und ein drittes Ventilglied (6) den Auslass (10) zum Bypasskanal (21) beherrscht.

6. Regelbare Zweiwegeventilvorrichtung für eine Verbrennungskraftmaschine nach einem der Ansprüche 1 bis 4, **dadurch gekennzeichnet, daß** auf der Ventilstange (3) zwei Ventilglieder (24, 25) angeordnet sind, wovon ein erstes Ventilglied (24) eine sich axial erstreckende Steuerfläche (27) und eine sich radial erstrekkende Steuerfläche (26) aufweist, wobei jede Steuerfläche (26, 27, 31) mit einem Ventilsitz (37, 29, 38) korrespondiert.

7. Regelbare Zweiwegeventilvorrichtung für eine Verbrennungskraftmaschine nach Anspruch 6, **dadurch gekennzeichnet, daß** die sich radial erstreckende Steuerfläche (26) des ersten Ventilgliedes (24) den Abgaseinlaß (8) beherrscht, die sich axial erstreckende Steuerfläche (27) des ersten Ventilgliedes (24) den Auslaß (28) zum Bypasskanal (36) beherrscht und eine sich radial erstreckende Steuerfläche (31) des zweiten Ventilgliedes (25) den Abgasauslaß (32) zum Abgaskühler beherrscht.

8. Regelbare Zweiwegeventilvorrichtung für eine Verbrennungskraftmaschine nach Anspruch 7, **dadurch gekennzeichnet, daß** das zweite Ventilglied (25) eine sich axial erstreckende Mantelfläche (33) aufweist.

9. Regelbare Zweiwegeventilvorrichtung für eine Verbrennungskraftmaschine nach einem der Ansprüche 6 bis 8, **dadurch gekennzeichnet, daß** die sich axial erstreckende Steuerfläche (27) des ersten Ventilgliedes (24) als zylindrischer Au-ßenmantel (30) ausgeführt ist, dessen Durchmesser kleiner ist, als der Durchmesser des zweiten Ventilgliedes (25) und dass zwischen einer Innenwand des Gehäuses (7) und dem zylindrischen Außenmantel (30) ein Spalt (35) ausgebildet ist, der an der von dem ersten Auslaß (28) abgewandten Seite angeordnet ist.

10. Regelbare Zweiwegeventilvorrichtung für eine Verbrennungskraftmaschine nach einem der Ansprüche 1 bis 4 oder 6, **dadurch gekennzeichnet, daß** der Abgaseinlaß (41) zwischen den beiden Abgasauslässen (42, 43) angeordnet ist.

11. Regelbare Zweiwegeventilvorrichtung für eine Verbrennungskraftmaschine nach Anspruch 10, **dadurch gekennzeichnet, daß** der Abstand zwischen zwei sich radial erstreckenden Steuerflächen (44, 45) des ersten und des zweiten Ventilgliedes (39, 40) gleich der Höhe des Abgaseinlasses (41) zwischen einem ersten und zweiten Ventilsitz (46, 47) ist, wovon der erste Ventilsitz (46) den Durchgang zwischen dem Abgaseinlaß (41) und dem Abgasauslaß (42) zum Bypasskanal und der zweite Ventilsitz (47) den Durchgang zwischen dem Abgaseinlaß (41) und dem Abgasauslaß (43) zum Abgaskühler umgibt.

12. Regelbare Zweiwegeventilvorrichtung für eine Verbrennungskraftmaschine nach Anspruch 11, **dadurch gekennzeichnet, daß** der Abgaseinlaßstrom durch das Aufliegen der sich radial erstreckenden Steuerflächen (44, 45) auf den Ventilsitzen (46, 47) unterbrochen ist und die sich axial erstreckende Steuerfläche (48) des ersten Ventilgliedes (39) einen gleichen Außendurchmesser aufweist wie der Innendurchmesser beider Ventilsitze (46, 47) und eine Höhe aufweist, die im wesentlichen dem Abstand der beiden Ventilsitze (46, 47) zueinander entspricht, so daß die sich axial erstreckende Steuerfläche (48) wahlweise mit jeweils einem der beiden Ventilsitze (46, 47) zusammen wirkt.

## Claims

1. Controllable two-way valve device for an internal combustion engine which comprises a valve stem (3) and at least two valve members (4, 5, 6; 24, 25; 39, 40) and which can be operated via an actuating unit (2), and with a housing (7) in which precisely one inlet or precisely one outlet and two outlets or inlets are formed, wherein the precisely one inlet or outlet in each case can be fluidically connected to one or both of the outlets or inlets, **characterised in that** the valve stem (3) is firmly connected to the at least two valve members (4, 5, 6; 24, 25; 39, 40), which correspond with at least two valve seats (12, 17, 22; 29, 37, 38; 46, 47), wherein the at least two valve members (4, 5, 6; 22, 23; 39, 40) comprise three control faces (11, 13, 18; 26, 27, 31; 44, 45, 48).

2. Controllable two-way valve device for an internal combustion engine according to Claim 1, **characterised in that** the controllable two-way valve device is a combined exhaust gas recirculation and bypass valve device (1), wherein the precisely one inlet (8, 41) can be fluidically connected to an exhaust gas recirculation duct, the first outlet (9, 32, 42) can be fluidically connected directly or via a duct (16) to an exhaust gas cooler, and the second outlet (10, 28, 43) can be fluidically connected to a bypass duct (21, 36), via which the exhaust gas cooler can be bypassed.

3. Controllable two-way valve device for an internal combustion engine according to Claim 1 or 2, **characterised in that** at least one of the valve members (5; 24; 39) comprises a control face (13; 27; 48) which extends in the axial direction relative to the valve stem (3).

4. Controllable two-way valve device for an internal combustion engine according to any one of the preceding Claims, **characterised in that** the axially extending control face (13; 27; 48) is formed as a cylindrical outer surface (14; 30; 39) whose centre axis is formed by the valve stem (3).

5. Controllable two-way valve device for an internal combustion engine according to any one of the preceding Claims, **characterised in that** three valve members (4, 5, 6) are disposed on the valve stem (3), which members interact with a respective valve seat (12, 17, 22), wherein a first valve member (4) controls the exhaust gas inlet (8), a second valve member (5) controls the outlet (9) to the exhaust gas cooler, which is disposed between the exhaust gas inlet (8) and the outlet (10) to the bypass duct (21) and comprises the axially extending control face (13), wherein a flow can pass through the second valve member (5) in the axial direction, and a third valve member (6) controls the outlet (10) to the bypass duct (21).

6. Controllable two-way valve device for an internal combustion engine according to any one of Claims 1 to 4, **characterised in that** two valve members (24, 25) are disposed on the valve stem (3), of which a first valve member (24) comprises an axially extending control face (27) and a radially extending control face (26), wherein each control face (26, 27, 31) corresponds with a valve seat (37, 29, 38).

7. Controllable two-way valve device for an internal combustion engine according to Claim 6, **characterised in that** the radially extending control face (26) of the first valve member (24) controls the exhaust gas inlet (8), the axially extending control face (27) of the first valve member (24) controls the outlet (28) to the bypass duct (36), and a radially extending control face (31) of the second valve member (25) controls the exhaust gas outlet (32) to the exhaust gas cooler.

8. Controllable two-way valve device for an internal combustion engine according to Claim 7, **characterised in that** the second valve member (25) comprises an axially extending surface area (33).

9. Controllable two-way valve device for an internal combustion engine according to any one of Claims 6 to 8, **characterised in that** the axially extending control face (27) of the first valve member (24) is formed as a cylindrical outer surface (30), the diameter of which is smaller than the diameter of the second valve member (25), and that a gap (35) is formed between an inner wall of the housing (7) and the cylindrical outer surface (30), which gap is disposed on the side which is remote from the first outlet (28).

10. Controllable two-way valve device for an internal combustion engine according to any one of Claims 1 to 4 or 6, **characterised in that** the exhaust gas inlet (41) is disposed between the two exhaust gas outlets (42, 43).

11. Controllable two-way valve device for an internal combustion engine according to Claim 10, **characterised in that** the distance between two radially extending control faces (44, 45) of the first and the second valve member (39, 40) is equal to the height of the exhaust gas inlet (41) between a first and a second valve seat (46, 47), of which the first valve seat (46) surrounds the passage between the exhaust gas inlet (41) and the exhaust gas outlet (42) to the bypass duct and the second valve seat (47) surrounds the passage between the exhaust gas inlet (41) and the exhaust gas outlet (43) to the exhaust gas cooler.

12. Controllable two-way valve device for an internal combustion engine according to Claim 11, **characterised in that** the exhaust gas inlet flow is interrupted by applying the radially extending control faces (44, 45) to the valve seats (46, 47), and the axially extending control face (48) of the first valve member (39) has an outside diameter which is the same as the inside diameter of the two valve seats (46, 47) and a height which corresponds substantially to the distance between the two valve seats (46, 47), so that the axially extending control face (48) interacts with either of the two valve seats (46, 47).

## Revendications

1. Dispositif de soupape à deux voies réglable pour un moteur à combustion interne, qui comporte une tige de soupape (3) et au moins deux organes de soupape (4, 5, 6 ; 24, 25 ; 39, 40) et qui est actionnable par l'intermédiaire d'une unité de réglage (2), ainsi qu'un corps (7) dans lequel sont réalisés exactement une admission ou exactement un échappement et deux échappements ou admissions, la exactement une admission ou le exactement un échappement pouvant être respectivement en liaison fluidique avec un ou deux des échappements ou admissions, **caractérisé en ce que** la tige de soupape (3) est assemblée fixement avec les au moins deux organes de soupape (4, 5, 6 ; 24, 25 ; 39, 40), qui correspondent à au moins deux sièges de soupape (12, 17, 22 ; 29, 37, 38 ; 46, 47), les au moins deux organes de soupape (4, 5, 6 ; 22, 23 ; 39, 40) présentant trois surfaces de commande (11, 13, 18 ; 26, 27, 31 ; 44, 45, 48).

2. Dispositif de soupape à deux voies réglable pour un moteur à combustion interne suivant la revendication 1, **caractérisé en ce que** le dispositif de soupape à deux voies réglable est un dispositif combiné (1) de soupape de recyclage des gaz d'échappement et de bipasse, la exactement une admission (8, 41) pouvant être en liaison fluidique avec un conduit de recyclage des gaz d'échappement, le premier échappement (9, 32, 42) pouvant être en liaison fluidique, directement ou par l'intermédiaire d'un conduit (16), avec un refroidisseur de gaz d'échappement, et le deuxième échappement (10, 28, 43) pouvant être en liaison fluidique avec un conduit de bipasse (21, 36), par l'intermédiaire duquel peut être contourné le refroidisseur de gaz d'échappement.

3. Dispositif de soupape à deux voies réglable pour un moteur à combustion interne suivant l'une des revendications 1 et 2, **caractérisé en ce qu'**au moins l'un des organes de soupape (5 ; 24 ; 39) présente une surface de commande (13 ; 27 ; 48) s'étendant dans la direction axiale par rapport à la tige de soupape (3).

4. Dispositif de soupape à deux voies réglable pour un moteur à combustion interne suivant l'une des revendications précédentes, **caractérisé en ce que** la surface de commande (13 ; 27 ; 48), s'étendant dans la direction axiale, est réalisée sous forme d'enveloppe extérieure cylindrique (14 ; 30 ; 39), dont l'axe médian est formé par la tige de soupape (3).

5. Dispositif de soupape à deux voies réglable pour un moteur à combustion interne suivant l'une des revendications précédentes, **caractérisé en ce que** trois organes de soupape (4, 5, 6), qui coopèrent chacun avec un siège de soupape (12, 17, 22), sont disposés sur la tige de soupape (3), un premier organe de soupape (4) contrôlant l'admission de gaz d'échappement (8), un deuxième organe de soupape (5) contrôlant l'échappement (9) en direction du refroidisseur de gaz d'échappement, lequel organe de soupape est disposé entre l'admission de gaz d'échappement (8) et l'échappement (10) en direction du conduit de bipasse (21) et présente la surface de commande (13) s'étendant dans la direction axiale, le deuxième organe de soupape (5) pouvant être balayé dans la direction axiale, et un troisième organe de soupape (6) contrôlant l'échappement (10) en direction du conduit de bipasse (21) .

6. Dispositif de soupape à deux voies réglable pour un moteur à combustion interne suivant l'une des revendications 1 à 4, **caractérisé en ce que** deux organes de soupape (24, 25) sont disposés sur la tige de soupape (3), dont un premier organe de soupape (24) présente une surface de commande (27) s'étendant dans la direction axiale et une surface de commande (26) s'étendant dans la direction radiale, chaque surface de commande (26, 27, 31) correspondant à un siège de soupape (37, 29, 38).

7. Dispositif de soupape à deux voies réglable pour un moteur à combustion interne suivant la revendication 6, **caractérisé en ce que** la surface de commande (26), s'étendant dans la direction radiale, du premier organe de soupape (24) contrôle l'admission de gaz d'échappement (8), la surface de commande (27), s'étendant dans la direction axiale, du premier organe de soupape (24) contrôle l'échappement (28) en direction du conduit de bipasse (36), et une surface de commande (31), s'étendant dans la direction radiale, du deuxième organe de soupape (25) contrôle l'échappement de gaz (32) en direction du refroidisseur de gaz d'échappement.

8. Dispositif de soupape à deux voies réglable pour un moteur à combustion interne suivant la revendication 7, **caractérisé en ce que** le deuxième organe de soupape (25) présente une surface d'enveloppe (33) s'étendant dans la direction axiale.

9. Dispositif de soupape à deux voies réglable pour un moteur à combustion interne suivant l'une des revendications 6 à 8, **caractérisé en ce que** la surface de commande (27), s'étendant dans la direction axiale, du premier organe de soupape (24) est réalisée sous forme d'enveloppe extérieure cylindrique (30), dont le diamètre est inférieur au diamètre du deuxième organe de soupape (25), et **en ce qu'**une fente (35), disposée sur le côté opposé au premier échappement (28), est réalisée entre une paroi intérieure du corps (7) et l'enveloppe extérieure cylindrique (30). '

10. Dispositif de soupape à deux voies réglable pour un moteur à combustion interne suivant l'une des revendications 1 à 4 ou 6, **caractérisé en ce que** l'admission de gaz d'échappement (41) est disposée entre les deux échappements de gaz (42, 43).

11. Dispositif de soupape à deux voies réglable pour un moteur à combustion interne suivant la revendication 10, **caractérisé en ce que** la distance entre deux surfaces de commande (44, 45), s'étendant dans la direction radiale, du premier et du deuxième organe de soupape (39, 40) est égale à la hauteur de l'admission de gaz d'échappement (41) entre un premier et un second siège de soupape (46, 47), dont le premier siège de soupape (46) entoure le passage entre l'admission de gaz d'échappement (41) et l'échappement de gaz (42) en direction du conduit de bipasse, et le second siège de soupape (47) entoure le passage entre l'admission de gaz d'échappement (41) et l'échappement de gaz (43) en direction du refroidisseur de gaz d'échappement.

12. Dispositif de soupape à deux voies réglable pour un moteur à combustion interne suivant la revendication 11, **caractérisé en ce que** le flux de gaz d'échappement est interrompu par l'application des surfaces de commande (44, 45), s'étendant dans la direction radiale, sur les sièges de soupape (46, 47) et la surface de commande (48), s'étendant dans la direction axiale, du premier organe de soupape (39) présente un diamètre extérieur égal au diamètre intérieur des deux sièges de soupape (46, 47) et une hauteur qui correspond essentiellement à la distance mutuelle des deux sièges de soupape (46, 47), de sorte que la surface de commande (48), s'étendant dans la direction axiale, coopère sélectivement avec l'un des deux sièges de soupape (46, 47).
